# EUROPEAN PATENT SPECIFICATION

(11) **EP 4 061 882 B1**
(45) Date of publication and mention of the grant of the patent: **21.02.2024**
(21) Application number: 20807904.6
(22) Date of filing: 16.11.2020
(51) Int. Cl.: C08L 7/00, C08L 9/02, B60C 1/00, C08L 15/00

(54) **COMPOUND FOR BODY PLY SKIM**
VERBINDUNG FÜR REIFENKÖRPERAUSSENSCHICHT
COMPOSÉ POUR PELLICULE DE NAPPE DE CORPS

(30) Priority: 19.11.2019 IT 201900021594
(43) Date of publication of application: 28.09.2022
(73) Proprietor: Bridgestone Europe NV/SA, 1930 Zaventem (BE)
(72) Inventor: DI RONZA, Raffaele, 00128 Roma (IT); FIORENZA, Paolo, 00128 Roma (IT)
(74) Representative: Marchetti, Alessio
(86) International application number: PCT/IB2020/060739
(87) International publication number: WO 2021/099908

(56) References cited:
- EP-A1- 0 570 715
- EP-A2- 0 475 733
- WO-A1-2017/162583
- WO-A1-2017/194710
- CN-A- 107 383 446
- CN-A- 109 181 033
- US-A1- 2004 071 984
- US-A1- 2008 308 208

## Description

The invention relates to a compound for body ply skim having impermeability features that are such as to ensure a significant reduction in the thickness of the Innerliner layer or even a total elimination thereof.

Hereinafter the term Innerliner layer indicates a rubber inner layer, which, as it is substantially impermeable to air, is used in tubeless tyres in order to make sure that the air inside the carcass remains under pressure.

Generally speaking, the compounds used to manufacture the Innerliner are obtained with a rubber matrix deriving from an halogenated Isobutylene/Isoprene copolymer.

As it is known, in the tyre industry there is a much felt need to reduce the thickness of the Innerliner, thought without jeopardizing its performances in terms of impermeability. Indeed, a smaller thickness of the Innerliner layer necessarily implies a smaller quantity of material used, with evident advantages resulting therefrom both in terms of productivity and in terms of smaller weight of the tyre, with positive effects on the total energy consumption of the vehicle and on the rolling resistance.

The object of the invention is to provide a solution capable of significantly reducing the thickness of the Innerliner layer or even of completely eliminating it, thus obtaining the aforesaid advantages in terms of rolling resistance and in terms of productivity.

In the production of tyres, in order to meet the required resistance and durability standards, manufacturers use reinforcing plies made of a thermoplastic material (such as, for example, nylon, rayon, polyester, aramid). The rubber covering the plies is commonly known as "body ply skim". As a person skilled in the art knows, one of the features to be fulfilled by the body ply skim compound concerns the high adhesive power towards the plies. Indeed, a low adhesion of the body ply skim to the ply would necessarily lead to a short durability of the tyre.

Another requirement to be necessarily met by the body ply skim relates to its strength. Indeed, the strength and, hence, the integrity of the body ply skim directly affect the durability of the tyre.

The reinforcing plies are usually used as reinforcement material in the carcass and the body ply skim of the body plies generally is in direct contact with the Innerliner layer.

The Applicant surprisingly found out that, by properly changing the body ply skim compound, the latter can gain ideal features in term of permeability to the air, without jeopardizing its mechanical features and, hence, the durability of the tyre. In this way, the thickness of the Innerliner layer can be significantly reduced or even completely eliminated, as the Oxygen permeability action is totally or partly carried out by the body ply skim.

The subject-matter of the invention is a rubber compound for body ply skim comprising:
- a mix of rubber,
- a filler material, and
- a vulcanization system;
said compound being characterized in that said mix of rubber consists of 30 to 80 phr of Nitrile rubber (NBR) having an Acrylonitrile content higher than 35%; 10 to 50 phr of Epoxidized Natural Rubber (E-NR); and 10 to 50 of phr Natural Rubber (NR); the phr ratio between E-NR and NR ranging from 0.2 to 5.0.

The quantities are defined in phr, namely in parts per 100 parts of rubber, wherein the term rubber indicates the whole formed by NBR, E-NR and NR.

Hereinafter the term vulcanization system indicates an assembly of ingredients comprising at least Sulphur and accelerator agents which, in the preparation of the compound, are added in a final mixing step and fulfil the aim of supporting the vulcanization of the polymer base once the compound is subjected to a curing temperature.

Hereinafter the term "polymer base with a crosslinkable unsaturated chain" identifies any natural or synthetic non-cross-linked polymer capable of taking on all the chemical-physical and mechanical features which are typically assumed by elastomers following a cross-linking (vulcanization) with Sulphur-based systems.

Preferably, the phr ratio between E-NR and NR ranging from 1.0 to 3.0.

The rubber compound according to the invention preferably comprises an inert material with a laminated structure in an amount equal to or less than 40 phr.

Said inert material with a laminated structure preferably has a diameter ranging from 0.2 to 2 mm and an aspect ratio ranging from 5 to 30, preferably from 8 to 20.

Said inert material with a laminated structure is preferably comprised in the group consisting of Kaolin, Clay, Mica, Feldspar, Silica, Graphite, Bentonite, and Alumina.

A further subject-matter of the invention is a body ply skim portion manufactured with the compound according to the invention.

A further subject-matter of the invention is a tyre comprising a body ply skim portion manufactured with the compound according to the invention.

The examples below serve a mere explanatory and nonlimiting purpose, for a better understanding of the invention.

### EXAMPLES

Six compounds were produced, three of them being comparison compounds (Comp.1-3) and three of them being compounds according to the invention (A - C).

The three comparison compounds (Comp.1-3) can be divided into: a first comparison compound (Comp.1) representing a type of compound generally used for the preparation of Innerliner layers; a second compound (Comp.2) representing a type of compound generally used for the preparation of body ply skims; a third compound (Comp.3) comprises Nitrile rubber having an Acrylonitrile content lower than 35%.

The three compounds according to the invention (A - C) differ from one another in the Acrylonitrile content (always higher than 35%) and in the flat clay presence.

The comparison compounds Comp.1 and Comp.2 fulfil the aim of checking whether the body ply skim compounds of the invention have feature of permeability to Oxygen and Ply-rubber adhesion which can be compared with the ones of common Innerliner layer and body ply skim layers, respectively; the comparison compound Comp.3 fulfils the aim of checking the relevance of the use of Nitrile rubber having an Acrylonitrile content lower than 35%.

### Preparation of the compounds

The compounds were produced with a standard procedure explained below, which is not relevant for the purposes of the invention.

### (1^{st} mixing step)

The polymer bases, the reinforcing filler and the filler material (if present, also with the material with a laminated structure) were introduced into a mixer with tangential rotors (commonly known as Banbury) and with an inner volume ranging from 230 to 270 litres before the beginning of the mixing, thus reaching a filling factor ranging from 66 to 72%.

The mixer was operated at a speed ranging from 40 to 60 revolutions/minute and the mixture resulting therefrom was removed after having reached a temperature ranging from 140 to 160°C.

### (2^{nd} mixing step)

The vulcanization system was added to the mixture obtained from the preceding step, thus reaching a filling factor ranging from 63 to 67%.

The mixer was operated at a speed ranging from 20 to 40 revolutions/minute and the mixture resulting therefrom was removed after having reached a temperature ranging from 100 to 110°C.

### Composition of the compounds

Tables I and II show the phr compositions of the six compounds described above.

**TABLE I**

| | Comp.1 | Comp.2 | Comp.3 |
|---|---|---|---|
| SBR | -- | 35.0 | -- |
| Br-IIR | 80.0 | -- | -- |
| NR | 20.0 | 65.0 | 15.0 |
| E-NR | -- | -- | 15.0 |
| Nitrile rubber NBR 28.60 | -- | -- | 70.0 |
| CB | 50.0 | 40.0 | 40.0 |
| CaCO3 | 40.0 | -- | -- |
| Laminated clay | -- | -- | 10.0 |
| Sulphur | 1.0 | 2.0 | 2.0 |
| MBTS | 1.5 | 0.2 | 0.2 |
| TBBS | -- | 0.8 | 0.8 |

**TABLE II**

| | A | B | C |
|---|---|---|---|
| NR | 15.0 | 15.0 | 15.0 |
| E-NR | 15.0 | 15.0 | 15.0 |
| Nitrile rubber NBR 39.60 | 70.0 | 70.0 | -- |
| Nitrile rubber NBR 45.60 | -- | -- | 70.0 |
| CB | 40.0 | 40.0 | 40.0 |
| Laminated clay | 10.0 | -- | 10.0 |
| Sulphur | 2.0 | 2.0 | 2.0 |
| MBTS | 0.2 | 0.2 | 0.2 |
| TBBS | 0.8 | 0.8 | 0.8 |

SBR is a polymer base obtained by means of an emulsion or solution polymerization process with a styrene content ranging from 20 to 45% and an oil content ranging from 0 to 30%;

Br-IIR stands for Bromobutyl rubber.

NR stands for Natural Rubber, consisting of a polymer base made up of 1,4-cis Polyisoprene rubber of natural origin.

E-NR stands for Epoxidized Natural Rubber, having a degree of epoxidation amounting to 25%.

Nitrile rubber NBR 28.60 has 28% in weight of Acrylonitrile with 60 MU @ 100°C of viscosity, produced by the VERSALIS SPA company.

Nitrile rubber NBR 39.60 has 39% in weight of Acrylonitrile with 60 MU @ 100°C of viscosity, produced by the VERSALIS SPA company.

Nitrile rubber NBR 45.60 has 45% in weight of Acrylonitrile with 60 MU @ 100°C of viscosity, produced by the VERSALIS SPA company.

CB stands for carbon black belonging to the N6 class.

The laminated Clay used is a mineral filler produced and sold by BASF under the name ASP^{®} NC X-1.

MBTS stands for Mercaptobenzothiazol-disulfide used as vulcanization accelerator.

TBBS stands for N-tert-butyl-2-benzothiazyl sulfenamide used as vulcanization accelerator.

### Results of the lab tests

The compounds described above were used to produce respective samples, which were subjected to assessment tests in order to check the properties in terms of ply to rubber adhesion and in terms of permeability to Oxygen.

The Oxygen permeability test was carried out on materials with a thickness of 0.7 mm and using a conventional apparatus, such as MOCON^{®} OX-TRAN^{®} (model 2/61). The values were measured at a temperature of 25 °C. In Tables III and IV the Oxygen permeability values are in cc*mm/m²*day

The adhesion of the compounds to the reinforcing ply was estimated as percentage of ply still covered with rubber after the separation of the two parts of the ply-rubber assembly through application of a load. The ply used in the text is made of PET.

As to the Oxygen permeability values shown in Tables III and IV, it should be pointed out that the lower the value shown therein, the better the feature.

The ply-rubber adhesion value of the comparison compound Comp.1 is not shown in the table as said compound, being used for an Innerliner layer and not for a body ply skim layer, does not have this feature.

**TABLE III**

| | Comp.1 | Comp.2 | Comp.3 |
|---|---|---|---|
| Oxygen permeability | 120 | 750 | 216 |
| Ply-rubber adhesion (coverage %) | -- | 70 | 50 |

**TABLE IV**

| | A | B | C |
|---|---|---|---|
| Oxygen permeability | 95 | 110 | 56 |
| Ply-rubber adhesion(coverage %) | 100 | 100 | 100 |

Based on the data shown in tables III and IV, the compounds according to the invention feature an Oxygen permeability that is better to that of the Innerliner (Comp.1) and a Ply-rubber adhesion that is better than that of the generic body ply skim (Comp.2).

The values of the Comp.3 prove that Nitrile rubber having an Acrylonitrile content lower than 35% cannot ensure the advantages of the compounds according to the invention.

The values concerning the body ply skim of the invention, ensuring an advantageous permeability, are such as to allow the thickness of the Innerliner layer to be significantly reduced. In other words, the boy ply skim of the invention allows the reduction of the thickness of the Innerliner, ensuring, anyway, both the necessary permeability to Oxygen, so that the latter does not reach the other parts of the tyre, thus causing the known degradation phenomena thereof, and the necessary strength, so as not to jeopardize the durability of the tyre.

In addition, considering the high permeability of the body ply skim of the invention, it would also be possible to completely eliminate the Innerliner layer.

In conclusion, from the data shown in table IV is clear that the solution of the present invention does not worsen, but surprisingly even improve, ply-rubber adhesion.

## Claims

1. Rubber compound for body ply skim comprising:
- a mix of rubber,
- a filler material, and
- a vulcanization system;
said compound being **characterized in that** said mix of rubber consists of 30 to 80 phr of Nitrile rubber having an Acrylonitrile content higher than 35% in weight; 10 to 50 phr of Epoxidized Natural Rubber (E-NR); and 10 to 50 of phr Natural Rubber (NR); the phr ratio between E-NR and NR ranging from 0.2 to 5.0.

2. Rubber compound according to claim 1, **characterized in that** the phr ratio between E-NR and NR ranging from 1.0 to 3.0.

3. Rubber compound according to claim 1 or 2, **characterized by** comprising an inert material with a laminated structure in an amount equal to or less than 40.0 phr.

4. Rubber compound according to any of the previous claims, **characterized in that** said inert material with a laminated structure has a diameter ranging from 0.2 to 2.0 mm and an aspect ratio ranging from 5 to 30.

5. Rubber compound according to claim 4, **characterized in that** preferably said inert material with a laminated structure has an aspect from 8 to 20.

6. Rubber compound according to any of the previous claims, **characterized in that** said inert material with a laminated structure is preferably comprised in the group consisting of Kaolin, Clay, Mica, Feldspar, Silica, Graphite, Bentonite, and Alumina.

7. A body ply skim portion manufactured with the compound according one of the previous claims.

8. A tyre comprising a body ply skim portion according to claim 7.

## Patentansprüche

1. Kautschukverbindung für Gummierungsschicht der Karkassenlage, umfassend:
- eine Mischung aus Kautschuk,
- ein Füllmaterial und
- ein Vulkanisationssystem;
wobei die Kautschukverbindung **dadurch gekennzeichnet ist,**
**dass** die Mischung aus Kautschuk aus 30 bis 80 phr Nitrilkautschuk mit einem Acrylnitrilgehalt von mehr als 35 Gew.-%;
10 bis 50 phr epoxidiertem Naturkautschuk (E-NR)
und 10 bis 50 phr Naturkautschuk (NR) besteht;
wobei das phr-Verhältnis zwischen E-NR und NR im Bereich von 0,2 bis 5,0 liegt.

2. Kautschukverbindung nach Anspruch 1, **dadurch gekennzeichnet, dass** das phr-Verhältnis zwischen E-NR und NR im Bereich von 1,0 bis 3,0 liegt.

3. Kautschukverbindung nach Anspruch 1 oder 2, **dadurch gekennzeichnet, dass** sie ein inertes Material mit einer laminierten Struktur in einer Menge gleich oder weniger als 40,0 phr umfasst.

4. Kautschukverbindung nach einem der vorhergehenden Ansprüche, **dadurch gekennzeichnet, dass** das inerte Material mit einer laminierten Struktur einen Durchmesser im Bereich von 0,2 bis 2,0 mm und ein Seitenverhältnis im Bereich von 5 bis 30 aufweist.

5. Kautschukverbindung nach Anspruch 4, **dadurch gekennzeichnet, dass** vorzugsweise das inerte Material mit einer laminierten Struktur ein Seitenverhältnis von 8 bis 20 aufweist.

6. Kautschukverbindung nach einem der vorhergehenden Ansprüche, **dadurch gekennzeichnet, dass** das inerte Material mit einer laminierten Struktur vorzugsweise aus der Gruppe bestehend aus Kaolin, Ton, Glimmer, Feldspat, Siliciumdioxid, Graphit, Bentonit und Aluminiumoxid besteht.

7. Portion einer Gummierungsschicht der Karkassenlage, hergestellt mit der Verbindung nach einem der vorhergehenden Ansprüche.

8. Reifen umfassend eine Portion einer Gummierungsschicht der Karkassenlage nach Anspruch 7.

## Revendications

1. Composé de caoutchouc pour un gommage de nappe carcasse comprenant :
- un mélange de caoutchouc,
- un matériau de remplissage et
- un système de vulcanisation;
ledit composé étant **caractérisé en ce que** ledit mélange de caoutchouc est constitué de 30 à 80 phr de caoutchouc nitrile ayant une teneur en acrylonitrile supérieure à 35 % en poids ;
10 à 50 phr de caoutchouc naturel époxydé (E-NR) et
10 à 50 phr de caoutchouc naturel (NR) ;
le rapport phr entre E-NR et NR étant compris entre 0,2 et 5,0.

2. Composé de caoutchouc selon la revendication 1, **caractérisé en ce que** le rapport phr entre E-NR et NR est compris entre 1,0 et 3,0.

3. Composé de caoutchouc selon la revendication 1 ou 2, **caractérisé en ce qu'**il comprend un matériau inerte à structure stratifiée en une quantité égale ou inférieure à 40,0 phr .

4. Composé de caoutchouc selon l'une quelconque des revendications précédentes, **caractérisé en ce que** ledit matériau inerte à structure stratifiée a un diamètre allant de 0,2 à 2. 0 mm et un rapport d'aspect allant de 5 à 30.

5. Composé de caoutchouc selon la revendication 4, **caractérisé en ce que**, de préférence, ledit matériau inerte à structure stratifiée a un rapport d'aspect allant de 8 à 20.

6. Composé de caoutchouc selon l'une quelconque des revendications précédentes, **caractérisé en ce que** ledit matériau inerte à structure stratifiée est de préférence compris dans le groupe constitué par le Kaolin, l'Argile, le Mica, le Feldspath, la Silice, le Graphite, la Bentonite, et l'Alumine .

7. Portion de gommage de nappe carcasse fabriquée avec le composé selon l'une des revendications précédentes.

8. Pneumatique comprenant une portion de gommage de nappe carcasse selon la revendication 7.
